# EUROPÄISCHE PATENTSCHRIFT

(11) **EP 2 186 433 B1**
(45) Veröffentlichungstag und Bekanntmachung des Hinweises auf die Patenterteilung: **22.08.2012**
(21) Anmeldenummer: 10001167.5
(22) Anmeldetag: 06.02.2001
(51) Int. Cl.: A46B 5/00, A46D 3/00, A61C 17/16

(54) **Verfahren zum Herstellen eines Handgriffes für ein Zahnreinigungsgerät**
Method for producing a handle for a tooth cleaning device
Procédé de fabrication d'une poignée pour un appareil de nettoyage de dents

(30) Priorität: 09.02.2000 DE 10005738
(43) Veröffentlichungstag der Anmeldung: 19.05.2010
(62) Teilanmeldung aus: 05015623.1
(73) Patentinhaber: Trisa Holding AG, 6234 Triengen (CH)
(72) Erfinder: Pfenniger, Philipp, 6234 Triengen (CH); Huber, Beat, 6233 Büron (CH)
(74) Vertreter: Schaad, Balass, Menzl & Partner AG

(56) Entgegenhaltungen:
- DE-A1- 2 501 291
- DE-A1- 4 241 409
- US-A- 5 934 762

## Beschreibung

Die vorliegende Erfindung betrifft ein Verfahren zum Herstellen eines Handgriffes für ein Zahnreinigungsgerät gemäss Oberbegriff des Anspruches 1.

Aus der DE-U-298 17 994.6 ist ein Zahnreinigungsgerät bekannt, bei dem der Handgriff aus zwei in getrennten schritten hergestellten Griffteilen besteht, von denen zumindest ein Griffteil schalenförmig ausgebildet ist. Die beiden Griffteile sind entlang der gemeinsamen Trennfuge miteinander verschweisst und somit unlösbar miteinander verbunden. Auch ein Verkleben der Griffteile wird vorgeschlagen.

Um aus Kunststoff bestehende Griffteile richtig miteinander verschweissen zu können setzt voraus, dass die Griffteile aus verschweissbaren Kunststoffen, d.h. aus Kunststoffen der gleichen Familie, bestehen, was die Auswahlmöglichkeit für die zu verwendenden Kunststoffe einschränkt.

Aus der FR-A-1.341.439 ist eine Zahnbürste bekannt, bei der die beiden Schalen des Handgriffs lösbar miteinander verbunden sind. Die eine, erste Schale weist eine Nut auf, in die im zusammengebauten Zustand der beiden Schalen ein Vorsprung an der andern, zweiten Schale eingreift. Die beiden Schalen werden mittels einer Schraube zusammengehalten. In die Nut der ersten Schale ist ein Dichtkörper eingelegt, welcher den Hohlraum im Handgriff gegen aussen abdichtet. Der Hohlraum im zweiteiligen Handgriff wird somit dadurch abgedichtet, dass in die Trennfuge zwischen den lösbar miteinander verbundenen Schalen ein Dichtkörper eingelegt wird, ohne dabei die Trennbarkeit der Schalen zu beeinträchtigen.

In der US-A-5,934,762 ist ein Verfahren zum Herstellen eines Zahnreinigungsgerätes beschrieben, bei dem zuerst die einzelnen Zahnbürstenkomponenten, nämlich ein Handgriff, zwei Bürstenteile sowie gegebenenfalls ein dritter Bürstenteil, getrennt voneinander hergestellt werden. In einem weiteren Schritt werden die beide Bürstenteile mit dem einen Ende des Handgriffes zusammengebracht. Die so zusammengebrachten Teile werden anschliessend mit einem gummielastischen Kunststoffmaterial umspritzt, das diese Teile in einem gemeinsamen Bereich vollständig umschliesst und so fest zusammenhält. Die einzeln hergestellten Teile werden somit zuerst zusammengefügt und dann in einem gemeinsamen Bereich vollständig mit einem weichelastischen Kunststoff umspritzt, um so die Teile fest und unlösbar miteinander zu verbinden.

In der DE-A-42 41 409 ist ein verfahren zur Herstellung eines aus zwei Formteilen bestehenden Bauteils beschrieben, bei dem die beiden Formteile im selben Spritzgusswerkzeug geformt und zusammengefügt werden. Im gleichen Spritzgusswerkzeug wird zudem an der Stossstelle der beiden zusammengefügten Formteile ein weiteres Formteil aus einem Kunststoff mit elastischen Eigenschaften, z. B. einem Elastomer, angespritzt.

Der vorliegenden Erfindung liegt nun die Aufgabe zu Grunde, ein Verfahren der eingangs genannten Art zu schaffen, das es erlaubt, auf einfache Weise die Griffteile aus den verschiedensten Materialien herzustellen, zusammenzufügen und unlösbar miteinander zu verbinden.

Diese Aufgabe wird erfindungagemäss durch ein Verfahren mit den Merkmalen des Anspruches 1 gelöst.

Dadurch, dass die gemeinsame Trennfuge zwischen den vorgängig im selben Spritzgusswerkzeug hergestellten Griffteilen im gleichen Spritzgusswerkzeug mit einem thermoplastischen Kunststoffmaterial ausgefüllt wird, wird auf einfache Weise eine von Hand nicht mehr lösbare Verbindung von hoher Qualität zwischen den Griffteilen erhalten. Im selben Spritzgiessvorgang können zudem aus dem Kunststoffmaterial, mit dem die Trennfuge ausgefüllt wird, noch andere Teile des Handgriffes gebildet werden.

Bevorzugte Weiterausgestaltungen des erfindungsgemässen Verfahrens bilden Gegenstand der abhängigen Ansprüche 2 bis 15.

Im Folgenden wird der Erfindungsgegenstand anhand der Zeichnungen näher erläutert. Es zeigen rein schematisch:
- Fig. 1;: in Seitenansicht eine Zahnbürste ohne Bürstenkopf mit voneinander getrennten Griffteilen,
- Fig. 2;: in Seitenansicht und teilweise im Schnitt die aus den beiden Griffteilen gemäss Fig. 1 zusammengesetzte Zahnbürste,
- Fig. 3;: einen Schnitt entlang der Linie III-III in Fig. 2,
- Fig. 4 und 5;: die Spritzgussform zum Herstellen der Verbindungsnaht zwischen den Griffteilen,
- Fig. 6;: einen Querschnitt durch den aus den beiden zusammengefügten und miteinander verbundenen Griffteilen bestehenden Handgriff,
- Fig. 7;: in einer der Fig. 6 entsprechenden Darstellung, jedoch in vergrössertem Massstab, eine andere Ausbildung der Verbindung zwischen den Griffteilen,
- Fig. 8;: in einer der Fig. 7 entsprechenden Darstellung eine weitere Ausbildung der Verbindung zwischen den Griffteilen,
- Fig. 9;: in Seitenansicht und in einer der Fig. 1 entsprechenden Darstellung eine andere Ausführungsform einer Zahnbürste vor dem Zusammenfügen der Griffteile,
- Fig. 10;: in Seitenansicht die Zahnbürste gemäss Fig. 8 in zusammengebautem Zustand, und
- Fig. 11;: die Spritzgussform zum Herstellen der Griffteile und der Verbindungsnaht.

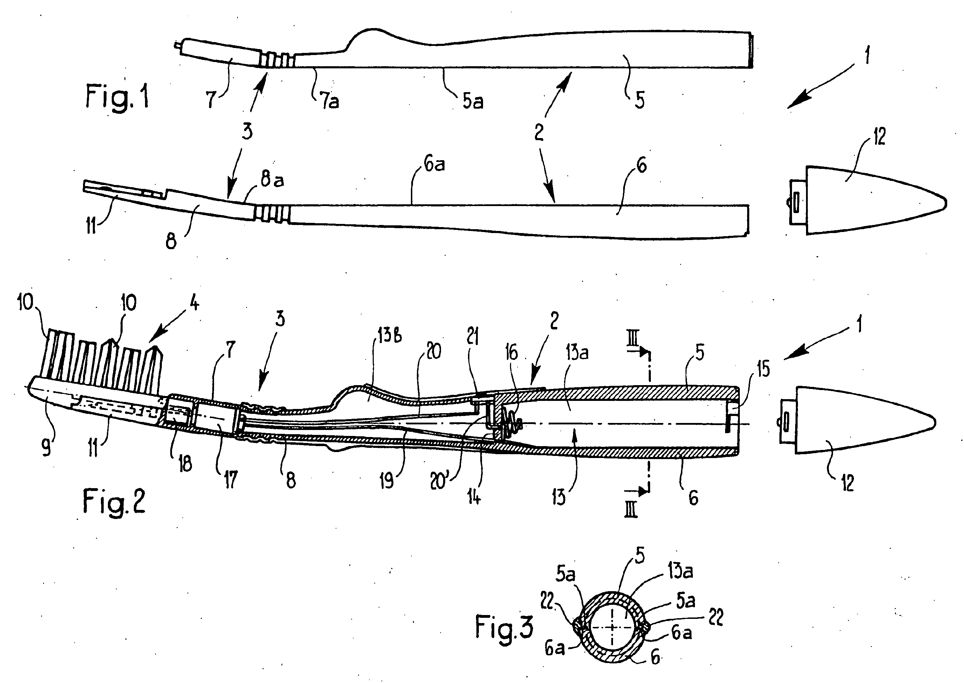

Vorerst wird anhand der Figuren 1-3 der Aufbau eines erfindungsgemäss hergestellten Zahnreinigungsgerätes, nämlich einer elektrisch angetriebenen Zahnbürste 1, beschrieben.

Die Zahnbürste 1 weist einen Handgriff 2 auf, der in einen Hals 3 übergeht, an dem ein Bürstenkopf 4 befestigt ist. Der Handgriff 2 besteht aus zwei Griffteilen 5 und 6, von denen zumindest der Griffteil 5 und vorzugsweise auch der Griffteil 6 schalenförmig ausgebildet ist. Der Hals 3 wird durch zwei Halsteile 7, 8 gebildet, die mit dem zugeordneten Griffteil 5 bzw. 6 einstückig ausgebildet sind. Die beiden Halsteile 7, 8 sind ebenfalls schalenförmig ausgebildet. Der Bürstenkopf 4 (Fig. 2) weist einen Borstenträger 9 auf, von dem auf bekannte Weise Borstenbündel 10 abstehen. Der Borstenträger 9 ist lösbar auf einen Fortsatz 11 des Halsteiles 8 aufgesetzt. Beim vorliegenden Ausführungsbeispiel ist somit der Bürstenkopf 4 auswechselbar. Selbstverständlich ist es auch möglich, den Borstenträger 9 mit dem Halsteil 8 einstückig auszubilden, was in diesem Fall bedeutet, dass der Bürstenkopf 4 nicht auswechselbar ist. Am hintern Ende des Handgriffes 2 ist eine Verschlusskappe 12 vorgesehen, die einen durch die beiden schalenförmigen Griffteile 5 und 6 festgelegten Hohlraum 13 abschliesst. Die Verschlusskappe 12 ist beim vorliegenden Ausführungsbeispiel mittels eines Bajonettverschlusses festgehalten. Es ist jedoch auch möglich, die Verschlusskappe 12 z.B. aufschraubbar auszugestalten.

Der durch die Griff- und Halsteile 5, 6, 7, 8 festgelegte Hohlraum 13 wird durch eine am Griffteil 5 angeformte Querwand 14 in einen hintern Hohlraum 13a und einen vorderen Hohlraum 13b unterteilt. In der Fig. 2 ist mit 15 eine auf der Innenseite der Griffteile 5, 6 vorgesehene Rastnut bezeichnet, die zur erwähnten Bajonettverbindung gehört, mittels der die Verschlusskappe 12 am Handgriff 2 lösbar festgehalten ist. Der hintere Hohlraum 13a dient zur Aufnahme einer nicht dargestellten Batterie, die sich am einen Ende an der Verschlusskappe 12 und am andern Ende an einer Kontaktfeder 16 abstützt, die an der Querwand 14 befestigt ist. Im Hals 3 ist ein Mikromotor 17 untergebracht, der mit einem Vibrationselement 18, z. B. einem Schwinganker, verbunden ist, der dazu dient, den Bürstenkopf 4 in Schwingung zu versetzen. Der Mikromotor ist über eine elektrische Verbindungsleitung 19 über die Verschlusskappe 12 mit dem einen Pol der Batterie im hinteren Hohlraum 13a verbunden. Eine weitere Verbindungsleitung 20 verbindet den Mikromotor 17 mit einem im Griffteil 5 vorgesehenen, von Hand betätigbaren Schalter 21, der über eine Verbindungsleitung 20' mit der Kontaktfeder 16, die mit dem andern Pol der Batterie in Kontakt steht, verbunden ist. Durch Betätigung des Schalters 21 wird der Mikromotor 17 ein- und ausgeschaltet. Für die Halterung bzw. Positionierung der verschiedenen elektrischen und mechanischen Teile des Antriebes für den Bürstenkopf 4 sind an wenigstens einem Griff- bzw. Halsteil 5, 7 oder 6, 8 Positionier- oder Halteteile, so z.B. die Querwand 14, vorgesehen.

Der Handgriff 2 und der Hals 3 bestehen vorzugsweise aus demselben Material und entweder aus demselben Kunststoff wie der Borstenträger 9 oder aus einem andersartigen Kunststoff. Vorzugsweise werden die Griff- und Halsteile 5, 7 bzw. 6, 8 im Ein- oder Mehrkomponentenspritzgiessverfahren hergestellt.

Wie aus den Figuren 1 und 2 hervorgeht werden die Griff- und Halsteile 5, 7 sowie 6, 8 in separaten Schritten hergestellt und dann zusammengefügt. Dabei bilden die Endflächen 5a, 7a und 6a, 8a der aneinander liegenden Teile 5, 7 und 6, 8 eine Trennfuge, die auf noch zu beschreibende Weise mittels einer Verbindungsnaht 22 (Fig. 3) verschlossen wird.

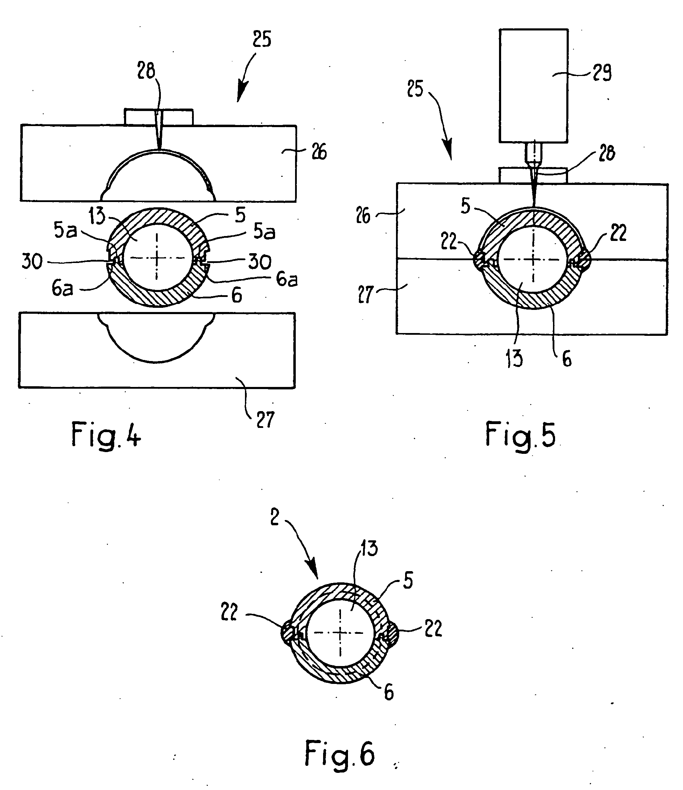

Anhand der Figuren 4-6 wird nun das Verfahren zur Herstellung einer Zahnbürste von der in den Figuren 1-3 gezeigten Art beschrieben.

Die wie erwähnt in separaten Schritten und z.B. an räumlich getrennten Orten hergestellten Griffteile 5, 6 mit angeformten Halsteilen 7 bzw. 8 werden zum fertigen Handgriff 2 mit Hals 3 zusammengefügt. Die zusammengefügten und gegebenenfalls durch zusätzliche mechanische Mittel zusammengehaltenen Griffteile 5, 6 werden dann in eine Spritzgussform 25 eingelegt, wie das in Fig. 4 dargestellt ist. Von dieser Spritzgussform 25 sind die beiden Formhälften 26 und 27 rein schematisch dargestellt. Mit 28 ist eine in der oberen Formhälften 26 vorgesehene Einspritzöffnung bezeichnet. Die einander zugekehrten Endflächen 5a und 6a sowie die Endflächen 7a, 8a der Halsteile 7 und 8 legen eine Trennfuge 30 fest. Nach dem Schliessen der Spritzgussform 25, d.h. dem zusammenbringen der beiden Formhälften 26, 27, wird mittels einer nur schematisch dargestellten Spritzeinheit 29 ein Kunststoffmaterial in den Formhohlraum der Spritzgussform 25 eingespritzt (Fig. 5). Die eingespritzte Kunststoffmasse verschliesst die Trennfuge 30 zwischen den Griff- und Halsteilen 5, 6, 7, 8 auf ihrer ganzen Länge oder nur über einen Teil ihrer Länge und bildet dann die Verbindungsnaht 22. In Fig. 6 ist der fertig und aus der Spritzgussform 25 entfernte Handgriff 2 im Querschnitt dargestellt.

Im beschriebenen Ausführungsbeispiel werden für die Griff- und Halsteile 5, 6, 7, 8 und die Verbindungsnaht 22 affine Kunststoffe verwendet, d.h. Kunststoffe, die beim Spritzgiessvorgang miteinander eine Materialverbindung eingehen. Dies ist z.B. dann der Fall, wenn für die Griff- und Halsteile 5, 6, 7, 8 Polypropylen (PP) und für die Verbindungsnaht 22 ein entsprechender thermoplastischer Kunststoff, vorzugsweise ein thermoplastisches Elastomer, verwendet wird. Eine solche Materialverbindung ergibt sich auch dann, wenn die Griff- und Halsteile 5, 6, 7, 8 aus SAN (Styrol-Acrylnitril) bestehen und für die Bildung der Verbindungsnaht 22 ein entsprechender thermoplastischer Kunststoff, z.B. ein geeignetes thermoplastisches Elastomer verwendet wird.

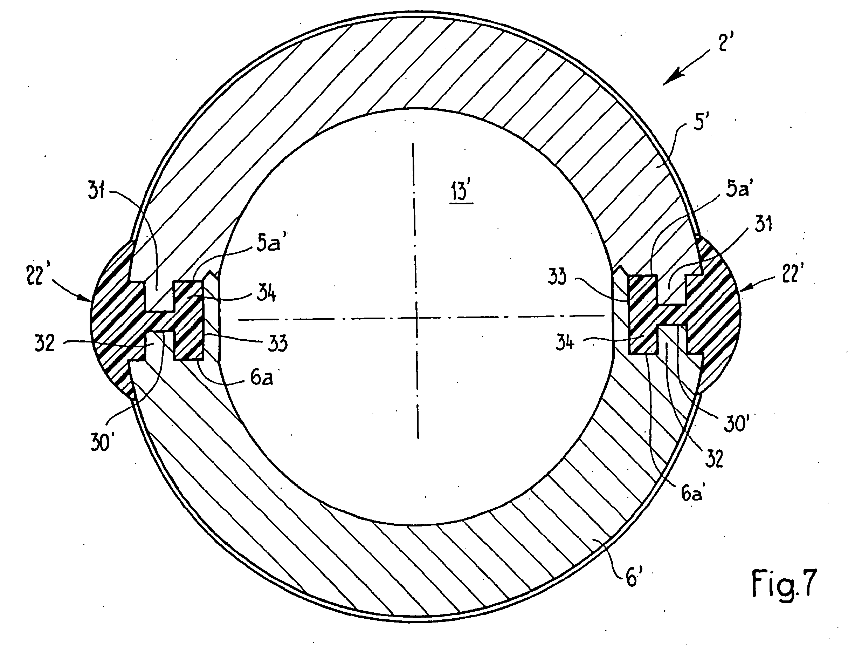

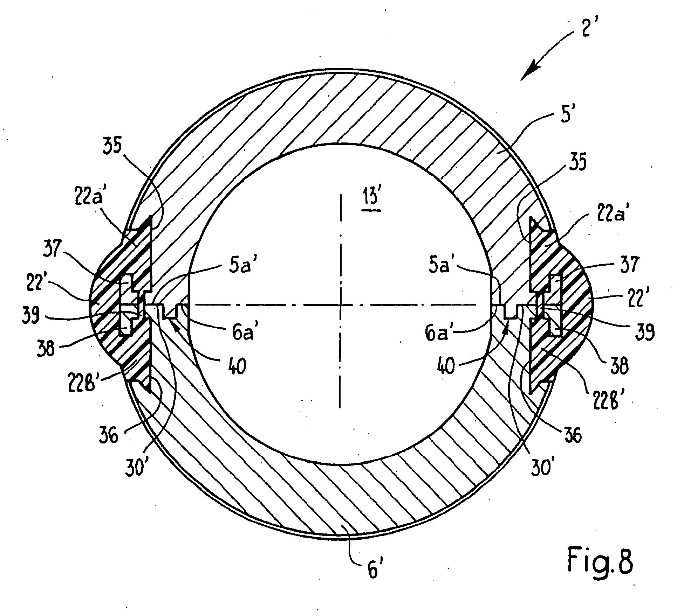

Das erfindungsgemässe Verfahren, d.h. das Verschliessen der Trennfuge 30 zwischen den Griff- bzw. Halsteilen 5, 6, 7, 8 im Spritzgiessverfahren, hat den Vorteil, dass auf diese Weise auch Griff- bzw. Halsteile miteinander verbunden werden können, die aus Kunststoffen bestehen, die zum Kunststoff, der für die Verbindungsnaht 22 verwendet wird, nicht affin sind. Dies ist z.B. dann der Fall, wenn der eine Griff- bzw. Halsteil 5, 7 aus Polypropylen (PP) und der andere Griffteil 6, 8 aus SAN besteht und zur Bildung der Verbindungsnaht 22 ein thermoplastisches Elastomer verwendet wird, das entweder mit PP oder SAN eine Materialverbindung eingeht und mit dem andern Kunststoff nicht. In solchen Fällen entsteht keine Materialverbindung zwischen den Teilen, was eine andere Ausgestaltung der Verbindungsnaht und/oder der Griff- bzw. Halsteile verlangt. Solche Ausführungsformen werden nun anhand der Fig. 7 und 8 beschrieben, in denen ein Handgriff 2' im Querschnitt gezeigt ist.

Bei der in der Fig. 7 gezeigten Ausführungsform sind in den einander zugekehrten, die Trennfuge 30' festlegenden Endflächen 5a', 6a' vorzugsweise leistenförmige vorsprünge 31, 32 ausgebildet, die vom Kunststoffmaterial der Verbindungsnaht 22' umgeben sind. Die einander gegenüber liegenden Vorsprünge 31, 32 bilden einen Hohlraum 33, in den die eingespritzte Kunststoffmasse eindringen kann. In der Fig. 7 ist der in diesem Raum 33 liegende Teil der Verbindungsnaht 22' mit 34 bezeichnet.

Durch diese Ausbildung ergibt sich eine mechanische, d.h. form- und kraftschlüssige Verbindung zwischen den Griffteilen 5', 6' und der Verbindungsnaht 22'. Selbstverständlich kann die form- oder kraftschlüssige Verbindung zwischen den Griffteilen 5', 6' und der Verbindungsnaht 22' auch auf andere Weise erzeugt werden, z.B. durch Vorsehen von Vertiefungen in den Endflächen 5a' und 6a' der Griffteile 5', 6', die dann mit dem Kunststoffmaterial der Verbindungsnaht 22' gefüllt werden.

Beim Ausführungsbeispiel gemäss der Fig. 8 sind benachbart zur Trennfuge 30' in den beiden Griffteilen 5', 6' Ausnehmungen 35 bzw. 36 vorhanden, die mit dem Kunststoffmaterial der Verbindungsnaht 22' gefüllt sind. Dabei hintergreifen die in diesen Ausnehmungen 35, 36 liegenden Teile 22a', 22b' der Verbindungsnaht 22' leistenartige Vorsprünge 37 bzw. 38 der Griffteile 5', 6'. Die sich jeweils gegenüberliegenden Ausnehmungen 35, 36 in den Griffteilen 5', 6' sind jeweils über einen Teil der Länge der Trennfuge 30' mittels Durchlässen 39 miteinander verbunden, die mit dem Kunststoffmaterial der Verbindungsnaht 22' gefüllt sind. Zum Zusammenhalten der zusammengefügten Griffteile 5', 6' vor dem Ueberspritzen entlang der Trennfuge 30' sind im Bereich der einander zugekehrten Endflächen 5a', 6a' der Griffteile 5', 6' mechanische Zentrier- oder Halteanordnungen 40 vorhanden, die beim Ausführungsbeispiel gemäss Fig. 8 in der Art von Nut-Feder-Verbindungen ausgebildet sind. Zu diesen Nut-Feder-Verbindungen gehören vorzugsweise leistenartige Vorsprünge im einen Griffteil 5', die in gegengleich ausgebildete Nuten im andern Griffteil 6' eingreifen.

Eine derartige mechanische Verbindung zwischen den Griffteilen 5', 6' ermöglicht es auch, einen Griffteil oder beide Griffteile aus einem andern Material herzustellen als aus Kunststoff, z.B. aus einem Metall wie z.B. Buntmetall oder Aluminium oder gar aus Holz.

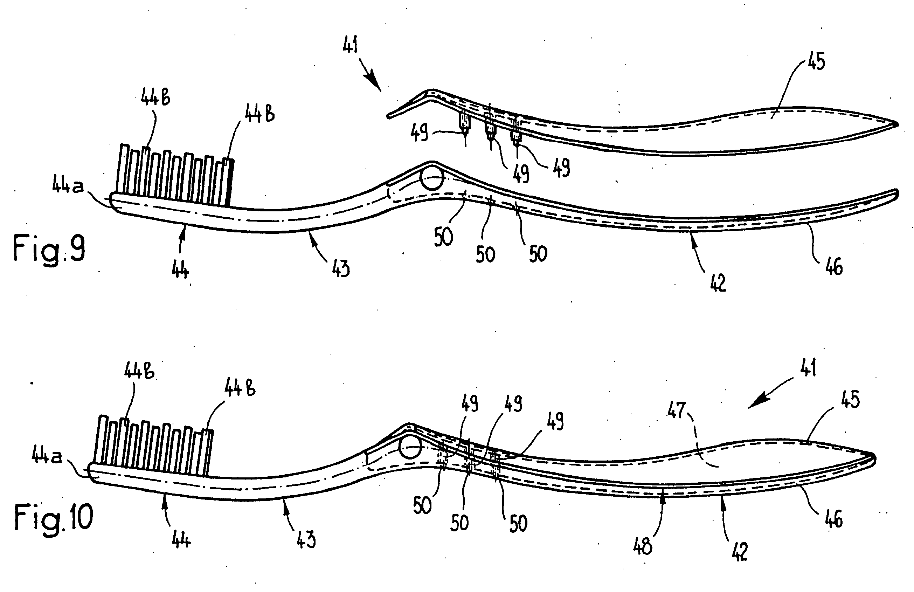

Mit dem anhand der Figuren 4-7 erläuterten Verfahren lassen sich auch Zahnbürsten, die anders als die Zahnbürste gemäss den Figuren 1-3 ausgestaltet sind, herstellen, wie das nun unter Bezugnahme auf die Figuren 9 und 10 beispielhaft erläutert wird.

Die in diesen Figuren 9 und 10 gezeigte Zahnbürste 41 besteht aus einem Handgriff 42, einem Hals 43 und einem Bürstenkopf 44. Letzterer weist einen mit dem Hals 43 einstückigen Borstenträger 44a auf, der mit Borstenbündeln 44b bestückt ist. Der Handgriff 42 besteht aus einem schalenförmig ausgebildeten oberen Griffteil 45 und einem unteren Griffteil 46, der mit dem Hals 43 einstückig ist und auch schalenförmig ausgebildet sein kann. Die beiden Griffteile 45, 46 legen einen Hohlraum 47 fest. Nach dem Zusammenfügen der beiden Griffteile 45, 48 wird die Trennfuge wie bereits beschrieben im Spritzgiessverfahren mittels eines Kunststoffmaterials verschlossen. Die dabei gebildete Verbindungsnaht ist mit 48 (Fig. 10) bezeichnet.

Die beiden Griffteile 45, 46 werden vor dem Ueberspritzen der Trennfuge mit dem Kunststoffmaterial durch mechanische Mittel gegenseitig positioniert und zusammengehalten. Hierzu ist der obere Griffteil 45 mit nach unten abstehenden, stiftartigen Nocken 49 versehen, die bei zusammengefügten Griffteilen 45, 46 in Oeffnungen 50 einrasten, die im unteren Griffteil 46 vorgesehen sind.

Die beiden Griffteile 45, 46 werden in getrennten Schritten hergestellt. Bestehen die Griffteile 45, 46 aus Kunststoff, so erfolgt deren Herstellung vorzugsweise im Ein- oder Mehrkomponentenspritzgiessverfahren.

Nach dem Zusammenfügen der Griffteile 45, 46 wird der Handgriff 42 in einer Spritzgussform im Bereich der Trennfuge zwischen den Griffteilen 45, 46 von einem Kunststoffmaterial überspritzt, wie das anhand der Figuren 4-6 erläutert worden ist.

Bei den vorstehend beschriebenen Ausführungsbeispielen werden die Griffteile 5, 6, 45, 46 örtlich getrennt voneinander hergestellt, vorzugsweise im Spritzgiessverfahren, anschliessend zusammengefügt und dann in einem weiteren Spritzgiessvorgang entlang der Trennfuge 30 mit dem Kunststoffmaterial der Verbindungsnaht 22, 48 umspritzt

Es ist aber auch denkbar, gewisse dieser Schritte örtlich zusammenzulegen. So kann z.B. zuerst ein erster Griffteil hergestellt werden. Ein zweiter Griffteil wird in einem Zweikomponenten-Spritzgusswerkzeug hergestellt und verbleibt in diesem Spritzgusswerkzeug. Der erste Griffteil wird mit dem zweiten Griffteil im Spritzgusswerkzeug zusammengefügt, z.B. mit Hilfe eines Roboters. Dann erfolgt in diesem Zweikomponenten-Spritzgusswerkzeug, gegebenenfalls nachdem die zusammengefügten Griffteile, beispielsweise mittels eines Roboters, in eine weitere Kavität des Spritzgusswerkzeuges umgesetzt worden sind, das Bilden der verbindungsnaht durch Einspritzen des entsprechenden Kunststoffmaterials. Es ist auch möglich, den zweiten Griffteil in die weitere Kavität zu verbringen, dann den ersten Griffteil mit dem zweiten Griffteil zusammenzufügen, und danach durch Einspritzen des entsprechenden Kunststoffmaterials in diese weitere Kavität die Verbindungsnaht zu bilden.

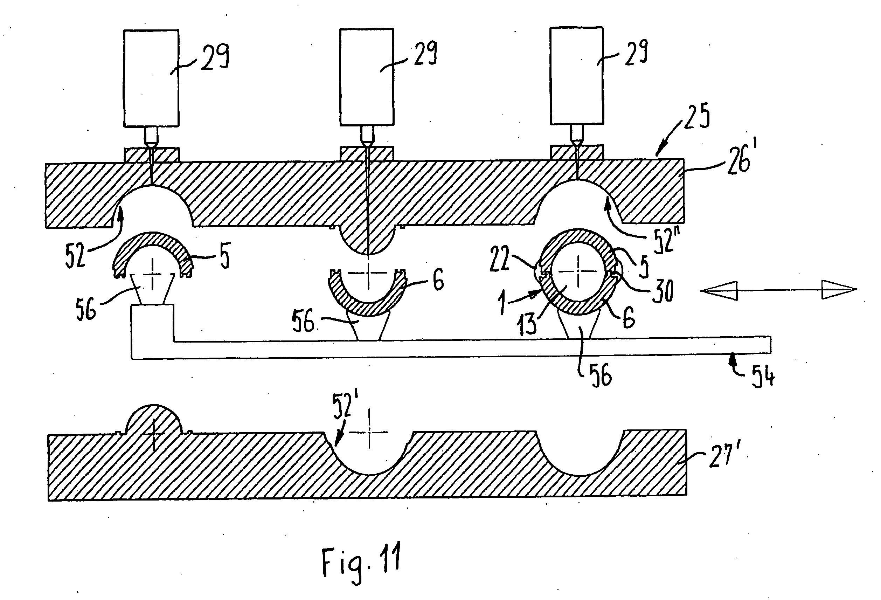

Die Herstellung der beiden Griffteile und der Verbindungsnaht kann auch am selben Ort erfolgen, d.h. in einer Mehrkomponenten-Spritzgussanlage, was anhand der Fig. 11 erläutert wird.

Fig. 11 zeigt in gleicher Darstellung wie Fig. 4 und 5 die beiden Formhälften 26' und 27' eines Dreikomponenten-Spritzgusswerkzeugs 25'. In einer ersten Kavität 52 wird - bei geschlossenem Spritzgusswerkzeug 25' - der erste Griffteil 5 durch Einspritzen des entsprechenden. Kunststoffmaterials mittels der zugeordneten Spritzeinheit 29 hergestellt. Gleichzeitig wird in einer zweiten Kavität 52' des Spritzgusswerkzeugs 25' der zweite Griffteil 6 durch Einspritzen eines anderen Kunststoffmaterials mittels der zugeordneten Spritzeinheit 29 gefertigt. Schliesslich wird, ebenfalls gleichzeitig, in einer dritten Kavität 52" des Spritzgusswerkzeuges 25' die Verbindungsnaht 22 zwischen den in einem vorhergehenden Spritzzyklus hergestellten und dann zusammengefügten Griffteilen 5 und 6 durch Einspritzen eines weiteren unterschiedlichen Kunststoffmaterials mittels der zugeordneten Spritzeinheit 29 gebildet.

Mit 54 ist ein, Saugköpfe 56 für die Griffteile 5, 6 und die Zahnbürste 1 aufweisender Roboterarm bezeichnet. Bei nach einem Spritzvorgang voneinander getrennten Formhälften 26', 27' fassen die mit einer Unterdruckquelle verbindbaren Saugköpfe 56 gleichzeitig die beiden Griffteile 5, 6 und die Zahnbürste 1 und heben diese aus den entsprechenden Kavitäten 52, 52', 52".

Der erste Griffteil 5 wird dann mittels des Roboterarms 54 in die dritte Kavität 52" der Formhälfte 26' eingesetzt und durch Lüften des entsprechenden Saugkopfs 56 freigegeben. Anschliessend werden die Griffteile 5, 6 zusammengefügt, indem der Roboterarm 54 den zweiten Griffteil 6 auf den ersten Griffteil 5 aufsetzt. Durch Lüften des zugeordneten Saugkopfs 56 wird der zweite Griffteil 6 freigegeben. Nachdem der Roboterarm 54 aus dem Bereich des Spritzgusswerkzeugs 25' - auch zur Abgabe der Zahnbürste 1 - hinausbewegt worden ist, werden die beiden Formhälften 26', 27' aufeinander zu bewegt, um das spritzgusswerkzeug 25' für den nächsten Einspritzvorgang zu schliessen.

Es ist auch möglich, die beiden Griffteile 5, 6 ausserhalb des Spritzgusswerkzeugs 25' - beispielsweise während eines Spritzvorgangs - zusammenzufügen und dann in die dritte Kavität 52" einzulegen. Diese Vorgehensweise ist vor allem dann vorteilhaft, wenn weitere Teile in den Hohlraum 13 einzubringen sind oder einer der Griffteile 5, 6 zu veredeln/bedrucken ist.

Der Vollständigkeit halber sei erwähnt, dass es selbstverständlich auch möglich ist, mehr als eine der Kavitäten 52, 52', 52" mittels einer gemeinsamen Spritzeinheit 29 zu speisen. Dies dann, wenn die Griffteile 5, 6 aus demselben Kunststoffmaterial bestehen, oder das Kunststoffmaterial für die Verbindungsnaht 22 auch zur Herstellung einer Membrane auf einer der oder beiden Griffteilen 5, 6 verwendet wird.

Selbstverständlich kann das Spritzgusswerkzeug 25' mehrere Reihen von ersten, zweiten und dritten Kavitäten 52, 52', 52" zur gleichzeitigen Herstellung mehrerer Zahnbürsten 1 aufweisen.

Für die Bildung der Verbindungsnaht 22, 48 wird wie beschrieben vorzugsweise ein weich, d.h. gummielastisch bleibender Kunststoff mit einer Shorehärte von vorzugsweise 10-70 verwendet. Es ist aber auch möglich, gleich wie für die Griff- und Halsteile einen harten Kunststoff zu verwenden.

Wenigstens der oben liegende Griffteil 5 bzw. 45 kann ganz oder bereichsweise opak oder ganz oder teilweise transparent sein.

Der Hohlraum 13, 47 im Handgriff 2, 42 kann mit einer Flüssigkeit und/oder Gegenständen gefüllt sein. Bei Zahnbürsten, wie sie in den Figuren 8 und 9 gezeigt sind, erfolgt das Füllen des Hohlraumes vor dem Spritzen der Verbindungsnaht.

Dadurch, dass die Verbindungsriaht 22, 48 aus Kunststoff besteht, kann die verbindungsnaht durch Wahl der Farbe des Kunststoffes auch als optisches Gestaltungselement eingesetzt werden.

Im selben Spritzgiessvorgang, in welchem das Kunststoffmaterial für die Verbindungsnaht eingespritzt wird, können auch andere Bereiche des Handgriffes, des Halses oder des Bürstenkopfes , z.B. der Fingerauflagebereich oder Dichtelemente, aus diesem Kunststoffmaterial gebildet werden.

## Patentansprüche

1. Verfahren zum Herstellen eines Handgriffes (2; 42) für ein Zahnreinigungsgerät (1; 41), wobei der Handgriff (2; 42) aus wenigstens zwei Griffteilen (5, 6; 45, 46) gebildet wird, von denen mindestens der eine Griffteil (5; 45) schalenförmig ausgebildet wird und die entlang einer gemeinsamen Trennfuge (30) miteinander verbunden werden, **dadurch gekennzeichnet, dass** in einem Dreikomponenten-Spritzgusswerkzeug (25') in geschlossenem Zustand in einer ersten Kavität (52) durch Einspritzen eines ersten Kunststoffmaterials der erste Griffteil (5, 45) und in einer zweiten Kavität (52') durch Einspritzen eines zweiten Kunststoffmaterials der zweite Griffteil (6, 46) hergestellt werden und in einer dritten Kavität (52") durch Einspritzen eines thermoplastischen Kunststoffmaterials zur Bildung einer Verbindungsnaht (22) die Trennfuge (30) zwischen den in einem vorhergehenden Spritzzyklus hergestellten Griffteilen (5, 6; 45, 46) ausgefüllt wird, und im selben Spritzgiessvorgang, in dem das Kunststoffmaterial für die Verbindungsnaht (22) eingespritzt wird, aus dem Kunststoffmaterial, mit dem die Trennfuge (30) ausgefüllt wird, noch andere Bereiche des Handgriffes (2; 42) gebildet werden.

2. Verfahren nach Anspruch 1, **dadurch gekennzeichnet, dass**, zur Bildung der Verbindungsnaht (22) ein thermoplastisches Elastomer eingespritzt wird.

3. Verfahren nach Anspruch 1, **dadurch gekennzeichnet, dass** aus dem thermoplastischen Kunststoffmaterial, mit dem die Trennfuge (30) ausgefüllt wird, Fingerauflagebereiche gebildet werden.

4. Verfahren nach einem der Ansprüche 1 bis 3, **dadurch gekennzeichnet, dass** wenigstens einer der Griffteile (5, 6; 45, 46) mit einem zu einem Hals (3; 43) des Zahnreinigungsgeräts (1; 41) gehörenden Halsteil (7, 8; 43) versehen wird und dass aus dem thermoplastischen Kunststoffmaterial, mit dem die Trennfuge (30) ausgefüllt wird, Bereiche des Halses (7, 8; 43) gebildet werden.

5. Verfahren nach einem der Ansprüche 1 bis 4, **dadurch gekennzeichnet, dass** das thermoplastische Kunststoffmaterial für die anderen Bereiche des Handgriffes (2; 42) von derselben Spritzeinheit (29) eingespritzt wird wie das thermoplastische Kunststoffmaterial zum Ausfüllen der Trennfuge (30).

6. Verfahren nach Anspruch 1, **dadurch gekennzeichnet, dass** zumindest der eine Griffteil (5; 45) aus einem transparenten Kunststoff hergestellt wird.

7. Verfahren nach einem der Ansprüche 1 bis 6, **dadurch gekennzeichnet, dass** ein thermoplastisches Kunststoffmaterial mit einer Shorehärte von 10 - 70 verwendet wird.

8. Verfahren nach einem der Ansprüche 1 bis 7, **dadurch gekennzeichnet, dass** mindestens einer der Griffteile (5, 6; 45, 46) mit Ausnehmungen (35, 36) versehen wird, die beim Ausfüllen der Trennfuge (30) mit dem thermoplastischen Kunststoffmaterial gefüllt werden.

9. Verfahren nach einem der Ansprüche 1 bis 8, **dadurch gekennzeichnet, dass** durch die zusammengefügten Griffteile (5, 6; 45, 46) ein Hohlraum (13; 47) gebildet wird.

10. Verfahren nach einem der Ansprüche 1 bis 9, **dadurch gekennzeichnet, dass** für wenigstens den einen der zwei Griffteile (5, 6; 45, 46) ein Kunststoffmaterial verwendet wird, das mit dem thermoplastischen Kunststoffmaterial der Trennfuge (30) eine Materialverbindung eingeht.

11. Verfahren nach Anspruch 10, **dadurch gekennzeichnet, dass** für beide Griffteile (5, 6; 45, 46) Kunststoffmaterialien verwendet werden, die mit dem thermoplastischen Kunststoffmaterial der Trennfuge (30) eine Materialverbindung eingehen.

12. Verfahren nach einem der Ansprüche 1 bis 11, **dadurch gekennzeichnet, dass** die Griffteile (5, 6; 45, 46) an den einander zugekehrten Endflächen (5a', 6a') mit Zentrier- oder Halteanordnungen (40) versehen werden.

13. Verfahren nach einem der Ansprüche 1 bis 12, **dadurch gekennzeichnet, dass** einer der Griffteile (5, 6; 45, 46) veredelt oder bedruckt wird.

14. Verfahren nach einem der Ansprüche 1 bis 3, **dadurch gekennzeichnet, dass** wenigstens einer der Griffteile (5, 6; 45, 46) mit einem zu einem Bürstenkopf (4, 44) des Zahnreinigungsgeräts (1; 41) gehörenden Borstenträger (9; 44a) versehen wird und dass aus dem thermoplastischen Kunststoffmaterial, mit dem die Trennfuge (30) ausgefüllt wird, Bereiche des Bürstenkopfs (4; 44) gebildet werden.

15. Verfahren nach den Ansprüchen 4 und 14, **dadurch gekennzeichnet, dass** einer der Griffteile (5, 6; 45, 46) mit dem zugeordneten Halsteil (7, 8; 43) und dem Borstenträger (9; 44a) einstückig ausgebildet wird.

## Claims

1. Method for producing a handle (2; 42) for a tooth cleaning device (1; 41), the handle (2; 42) being made from at least two handle parts (5, 6; 45, 46), of which at least one handle part (5; 45) is formed in a shell-shaped manner, and which handle parts are connected to each other along a common parting line (30), **characterized in that**, in a three-component injection mould (25') in the closed state, the first handle part (5, 45) is produced in a first cavity (52) by injection of a first plastic, and the second handle part (6, 46) is produced in a second cavity (52') by injection of a second plastic, and, in a third cavity (52"), by injection of a thermoplastic to form a connection seam (22), the parting line (30) between the handle parts (5, 6; 45, 46) produced in a preceding injection cycle is filled, and, in the same injection-moulding procedure in which the plastic for the connection seam (22) is injected, other areas of the handle (2; 42) are also formed from the plastic with which the parting line (30) is filled.

2. Method according to Claim 1, **characterized in that** a thermoplastic elastomer is injected in order to form the connection seam (22).

3. Method according to Claim 1, **characterized in that** finger rest areas are formed from the thermoplastic with which the parting line (30) is filled.

4. Method according to one of Claims 1 to 3, **characterized in that** at least one of the handle parts (5, 6; 45, 46) is provided with a neck part (7, 8; 43) belonging to a neck (3; 43) of the tooth cleaning device (1; 41), and **in that** areas of the neck (7, 8; 43) are formed from the thermoplastic with which the parting line (30) is filled.

5. Method according to one of Claims 1 to 4, **characterized in that** the thermoplastic for the other areas of the handle (2; 42) is injected from the same injection unit (29) as the thermoplastic for filling the parting line (30).

6. Method according to Claim 1, **characterized in that** at least one handle part (5; 45) is made from a transparent plastic.

7. Method according to one of Claims 1 to 6, **characterized in that** a thermoplastic with a Shore hardness of 10-70 is used.

8. Method according to one of Claims 1 to 7, **characterized in that** at least one of the handle parts (5, 6; 45, 46) is provided with recesses (35, 36), which are filled with the thermoplastic during the filling of the parting line (30).

9. Method according to one of Claims 1 to 8, **characterized in that** a hollow space (13; 47) is formed by the joined-together handle parts (5, 6; 45, 46).

10. Method according to one of Claims 1 to 9, **characterized in that**, for at least one of the two handle parts (5, 6; 45, 46), a plastic is used that enters into a material bond with the thermoplastic of the parting line (30).

11. Method according to Claim 10, **characterized in that**, for both handle parts (5, 6; 45, 46), plastics are used that enter into a material bond with the thermoplastic of the parting line (30).

12. Method according to one of Claims 1 to 11, **characterized in that**, on the end faces (5a', 6a') directed towards each other, the handle parts (5, 6; 45, 46) are provided with centring or holding arrangements (40).

13. Method according to one of Claims 1 to 12, **characterized in that** one of the handle parts (5, 6; 45, 46) is embellished or imprinted.

14. Method according to one of Claims 1 to 3, **characterized in that** at least one of the handle parts (5, 6; 45, 46) is provided with a bristle carrier (9; 44a) belonging to a brush head (4, 44) of the tooth cleaning device (1; 41), and **in that** areas of the brush head (4; 44) are formed from the thermoplastic with which the parting line (30) is filled.

15. Method according to Claims 4 and 14, **characterized in that** one of the handle parts (5, 6; 45, 46) is formed in one piece with the associated neck part (7, 8; 43) and the bristle carrier (9; 44a).

## Revendications

1. Procédé de fabrication d'une poignée (2; 42) pour un appareil de nettoyage de dents (1; 41), dans lequel on forme la poignée (2; 42) à partir d'au moins deux parties de poignée (5, 6; 45, 46), dont au moins une partie de poignée (5; 45) est réalisée en forme de coque et qui sont assemblées l'une à l'autre le long d'un joint de séparation commun (30), **caractérisé en ce que** l'on fabrique dans un outil de coulée par injection à trois composants (25'), à l'état fermé, la première partie de poignée (5, 45) dans une première cavité (52) par injection d'une première matière plastique et la deuxième partie de poignée (6, 46) dans une deuxième cavité (52') par injection d'une deuxième matière plastique et on remplit dans une troisième cavité (52"), par injection d'une matière plastique thermoplastique en vue de la formation d'une soudure d'assemblage (22), le joint de séparation (30) entre les parties de poignée (5, 6; 45, 46) fabriquées lors d'un cycle d'injection précédent, et on forme encore, pendant la même opération de coulée par injection au cours de laquelle on injecte la matière plastique pour la soudure d'assemblage (22), d'autres régions de la poignée (2; 42) avec la matière plastique avec laquelle on remplit le joint de séparation (30).

2. Procédé selon la revendication 1, **caractérisé en ce que** l'on injecte un élastomère thermoplastique pour la formation de la soudure d'assemblage (22).

3. Procédé selon la revendication 1, **caractérisé en ce que** l'on forme des régions d'application des doigts avec la matière plastique thermoplastique avec laquelle on remplit le joint de séparation (30).

4. Procédé selon l'une quelconque des revendications 1 à 3, caractérisé en ce l'on munit au moins une des parties de poignée (5, 6; 45, 46) d'une partie de col (7, 8; 43) faisant partie d'un col (3; 43) de l'appareil de nettoyage de dents (1; 41) et en ce que l'on forme des régions du col (7, 8; 43) avec la matière plastique thermoplastique avec laquelle on remplit le joint de séparation (30).

5. Procédé selon l'une quelconque des revendications 1 à 4, **caractérisé en ce que** l'on injecte la matière plastique thermoplastique destinée aux autres régions de la poignée (2; 42) à partir de la même unité d'injection (29) que la matière plastique thermoplastique destinée au remplissage du joint de séparation (30).

6. Procédé selon la revendication 1, **caractérisé en ce que** l'on fabrique au moins une partie de poignée (5; 45) en une matière plastique transparente.

7. Procédé selon l'une quelconque des revendications 1 à 6, **caractérisé en ce que** l'on utilise une matière plastique thermoplastique avec une dureté Shore de 10 à 70.

8. Procédé selon l'une quelconque des revendications 1 à 7, **caractérisé en ce que** l'on munit au moins une des parties de poignée (5, 6; 45, 46) d'évidements (35, 36), que l'on remplit avec la matière plastique thermoplastique lors du remplissage du joint de séparation (30).

9. Procédé selon l'une quelconque des revendications 1 à 8, **caractérisé en ce que** l'on forme une cavité (13; 47) au moyen des parties de poignée assemblées (5, 6; 45, 46).

10. Procédé selon l'une quelconque des revendications 1 à 9, **caractérisé en ce que** l'on utilise pour au moins une des deux parties de poignée (5, 6; 45, 46) une matière plastique, qui forme une liaison matérielle avec la matière plastique thermoplastique du joint de séparation (30).

11. Procédé selon la revendication 10, **caractérisé en ce que** l'on utilise pour les deux parties de poignée (5, 6; 45, 46) des matières plastiques, qui forment une liaison matérielle avec la matière plastique thermoplastique du joint de séparation (30).

12. Procédé selon l'une quelconque des revendications 1 à 11, **caractérisé en ce que** l'on munit les parties de poignée (5, 6; 45, 46) de dispositifs de centrage et de maintien (40) sur les faces d'extrémité tournées l'une vers l'autre (5a', 6a').

13. Procédé selon l'une quelconque des revendications 1 à 12, **caractérisé en ce que** l'on parachève ou on imprime une des parties de poignée (5, 6; 45, 46).

14. Procédé selon l'une quelconque des revendications 1 à 3, **caractérisé en ce que** l'on munit au moins une des parties de poignée (5, 6; 45, 46) d'un support de poils (9; 44a) faisant partie d'une tête de brossage (4, 44) de l'appareil de nettoyage de dents (1; 41) et **en ce que** l'on forme des régions de la tête de brossage (4; 44) avec la matière plastique thermoplastique avec laquelle on remplit le joint de séparation (30).

15. Procédé selon les revendications 4 et 14, **caractérisé en ce que** l'on réalise en une seule pièce une des parties de poignée (5, 6; 45, 46) avec la partie de col associée (7, 8; 43) et le support de poils (9; 44a).
